# EUROPEAN PATENT SPECIFICATION

(11) **EP 1 622 739 B1**
(45) Date of publication and mention of the grant of the patent: **02.08.2006**
(21) Application number: 04728605.9
(22) Date of filing: 21.04.2004
(51) Int. Cl.: B23K 26/10, B23K 26/38, B23K 26/42, B42D 15/10, B26D 7/18, B65H 29/02, B23K 26/08, B23Q 11/00

(54) **MACHINE AND PROCESS FOR CUTTING OPENINGS IN A SUBSTRATE**
MASCHINE UND VERFAHREN ZUM SCHNEIDEN VON ÖFFNUNGEN IN EIN SUBSTRAT
MACHINE ET PROCEDE POUR DECOUPER DES OUVERTURES DANS UN SUBSTRAT

(30) Priority: 02.05.2003 EP 03009986
(43) Date of publication of application: 08.02.2006
(73) Proprietor: KBA-GIORI S.A., 1003 Lausanne (CH)
(72) Inventor: SCHAEDE, Johannes Georg, 97074 Würzburg (DE)
(74) Representative: Bugnion Genève
(86) International application number: PCT/IB2004/001273
(87) International publication number: WO 2004/096482

(56) References cited:
- EP-A- 0 927 597
- EP-A- 1 184 127
- WO-A-95/10420
- DE-A- 4 131 617
- FR-A- 2 586 959
- US-A- 5 348 285
- PATENT ABSTRACTS OF JAPAN vol. 1995, no. 11, 26 December 1995 (1995-12-26) & JP 7 214359 A (AMADA CO LTD), 15 August 1995 (1995-08-15)
- PATENT ABSTRACTS OF JAPAN vol. 1997, no. 06, 30 June 1997 (1997-06-30) & JP 9 029476 A (DENSO CORP), 4 February 1997 (1997-02-04)
- PATENT ABSTRACTS OF JAPAN vol. 1998, no. 10, 31 August 1998 (1998-08-31) & JP 10 113787 A (AMADA CO LTD), 6 May 1998 (1998-05-06)
- PATENT ABSTRACTS OF JAPAN vol. 1995, no. 11, 26 December 1995 (1995-12-26) & JP 7 197374 A (OFIC CO; others: 01), 1 August 1995 (1995-08-01)
- PATENT ABSTRACTS OF JAPAN vol. 0121, no. 05 (M-681), 6 April 1988 (1988-04-06) & JP 62 234688 A (YAMAZAKI MAZAK CORP), 14 October 1987 (1987-10-14)

## Description

The present invention concerns a machine for cutting an opening, for example a window, in a planar substrate according to the preamble of claim 1 (see, for example, JP-A-7/197 374).

The present invention also concerns a process for cutting an opening, for example a window, in a planar substrate.

Process of cutting an opening, such as a window, in a planar substrate (1), said process comprising the following steps:
- holding said substrate (1) with a gripper (8),
- moving said substrate (1) with help of the gripper (8) along a given direction,
- applying said substrate (1) against a surface (17) by using air under depression,
- directing a laser beam (13) onto said substrate (1) through a cutting opening (14) provided in said surface (17) to cut an opening in said substrate
- evacuating the cut part of said substrate (1).

In the field of banknotes and securities, there has been increasing needs for security features protecting against counterfeiting. Indeed, in the past years, computers, scanners and copy machines have been extensively developed and today, it is possible to buy very performing devices at a reasonable price. Since these devices are more performing, it has been at the same time necessary to develop new and improved security features for securities, such as banknotes, checks, cards (i.e. credit cards), ID cards, passports etc. which would not allow them to be copied by standard computers or scanners, or even modern color copy machines.

Such security features include special inks with iridescent properties, so called optically variable inks, used to print specific patterns on the substrate of the note, optically variable devices (such as holograms, kinegrams) in the shape of metallized patches, or also specific patterns, such as moiré patterns and other similar patterns; all of which are very difficult if not impossible to copy by actual machines, but, on the other hand, are easy to control visually.

Other security features include combinations of superimposed lines and/or patterns with colors, which are only visible under specific conditions, for example UV light or by transparency. Again, the interest of such security means is that they may easily be printed or placed on the document to be protected and also be controlled by simple devices, even visually, but they are impossible to reproduce with actual printers, scanners or copy machines.

Another specific technique involves watermarks in which the paper substrate is marked with lines or patterns only visible in transparency. A further development of this technique concerns pseudo-watermarks consisting in the creation of a window in the substrate, especially in paper-based substrates, which are normally not transparent, said window being transparent.

It is however very difficult to create or simulate a transparent window in a paper-based substrate. Transparent windows, as such, are widely used in polymer-based substrates for banknotes and securities, in order to provide a security element. These polymer-based substrates are usually completely transparent; therefore, to form a transparent window, it is only necessary to leave the chosen zone free of printing. However, in the case of paper, a substrate which is not transparent, a first process has been developed according to which, it is possible to reduce locally the thickness of the paper in order to create a transparent window in the substrate. PCT application WO 99/14433 for example, discloses this process and the content of this application is incorporated by reference in the present application. According to this known process, a soaking solution is applied on at least one surface of the paper in one or several predetermined zones, then one applies pressure and heat on the soaked zone so as to evaporate and densify the coated paper in said zone relative to the rest of the paper. Thus, said zones have a reduced thickness with respect to the rest of the paper and are transparent.

This first technique however has the drawback of weakening locally the paper in the zone comprising said window. In particular, the smaller the thickness of the window, the weaker the zone. Banknotes using such a technique thus have a reduced lifetime and must be exchanged, i.e. new bank notes must be printed to replace the older damaged ones.

Another technique implies to cut a hole directly in the substrate in order to create the transparent window. For example, PCT application WO 95/10420, the content of which is incorporated by reference in the present application, discloses a paper banknote with a cut window. It is of course necessary to cover the opening cut in the substrate, which is done in this case by a covering with a strip of transparent material, e.g. a foil or a laminate.

The aim of the invention is to improve the known machines and processes.

The aim of the invention is to provide an improved machine for cutting an opening in a planar substrate.

A further aim of the invention is to provide an improved process for cutting an opening into a planar substrate.

To fulfil these aims, the invention defines a machine for cutting an opening according to claim 1 and a method process for cutting an opening according to claim 9.

The invention will best understood by the description of an embodiment and of the accompanying drawings in which:
Figure 1 shows the principle of a machine according to the invention.
Figure 2 shows a cross-sectional top view of an aspiration box according to the invention.
Figure 3 shows a first embodiment of a laser guiding system.
Figure 4 shows a variant of the laser guiding system.

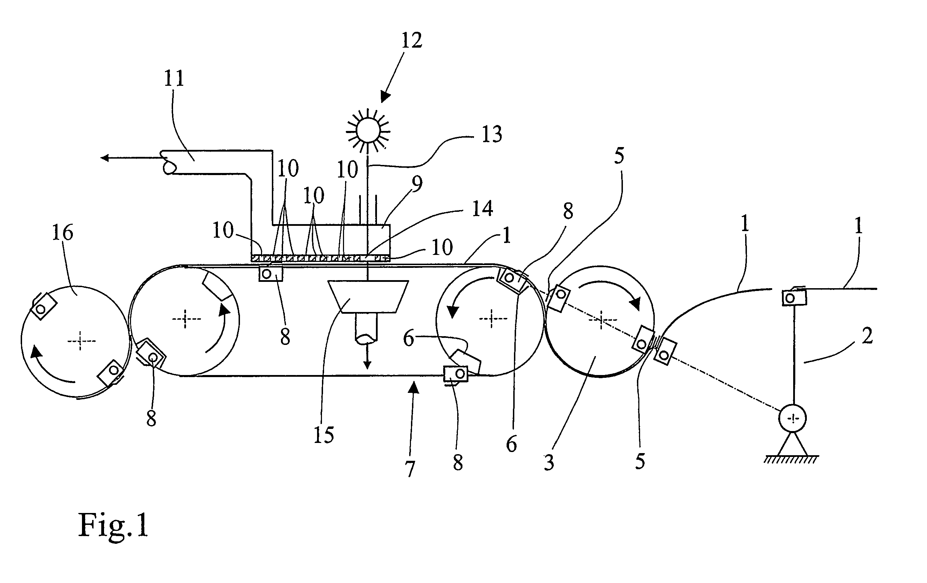

An embodiment of the machine for cutting an opening in a planar substrate is firstly described with reference to figure 1.

In this machine successive substrates 1, such as sheets of paper or other material, are brought to the machine by a feed system, for example a swing gripper transfer 2, and transferred on a first transfer cylinder 3. The successive substrates 1 are transferred by a transfer cylinder 4 known in the art of printing machines with gripper systems 5.

The substrates 1 are then transferred to a transporting device, such as a chain gripper system 7 comprising a chain on which gripper bars 8 are mounted to carry the successive substrates 1. The gripper bars cooperate with the first transfer cylinder 3 to take over the successive substrates 1 and transport them in the cutting part of the machine.

As explained, the substrates 1 are taken by the chain gripper system 7 until they arrive under the cutting part of the machine. This cutting part comprises an aspiration box 9 which has aspiration openings 10 in the bottom wall that are linked to an aspiration source 11, said source 11 providing air under depression in order to press the substrate 1 against the exterior surface of the bottom wall of the box 9 during the cutting operation.

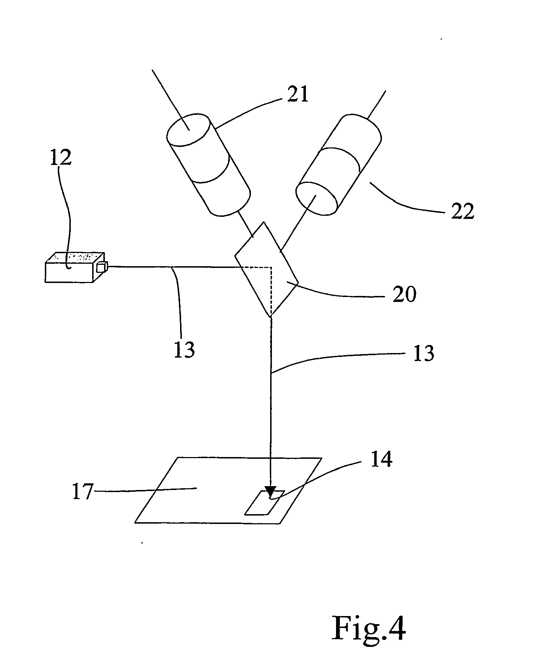

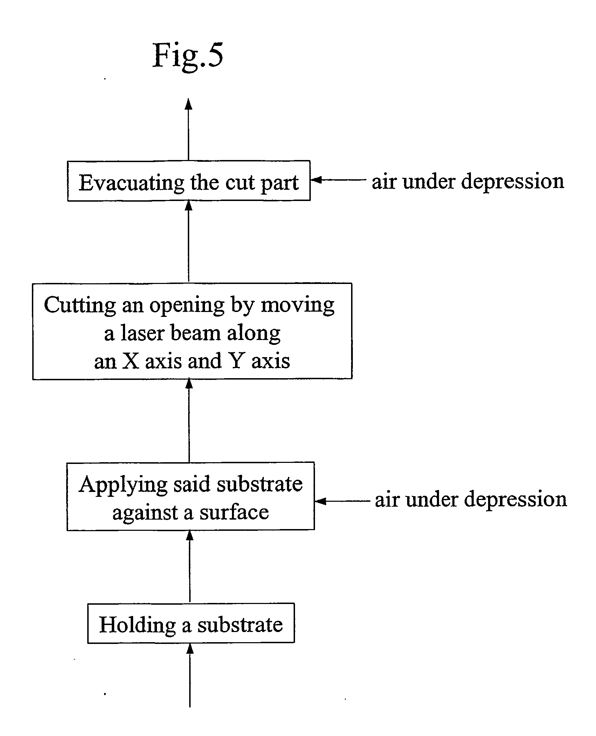

The cutting operation is carried out by a laser, the laser beam 13 being directed into a cutting opening 14 of the bottom wall of the box 9. The laser beam 13 is either aimed directly on the substrate being cut, or indirectly by means of mirrors or other equivalent devices. Accordingly, during the cutting operation, the substrate is halted and maintained pressed against the exterior surface of the bottom wall so that the laser beam may cut the wanted opening in the substrate through the cutting opening 14 of the bottom wall. This cutting opening 14 may have the same shape as the window being cut into the substrate or a larger size. To carry out the cutting operation, the laser beam 13 is aimed either directly by displacing the laser 12 itself along two orthogonal axis X-Y with appropriate mechanical means or the beam 13 can be aimed indirectly by mirrors (see figure 4) which are themselves moveable to displace the beam 13 along two orthogonal axis X-Y. The system is therefore able to cut widows of several different sizes with no change of machine, but only by a proper aiming of the beam 13 along the axis X-Y.

Once the cutting operation has taken place, the cut part is either aspirated in the box 9 through the air under depression and evacuated, or it can be aspirated in an evacuation outlet 15 also through air under depression.

Accordingly, if the cut part is being evacuated in the box via the evacuation outlet 15, it is preferred that the cutting opening 14 is closed by a transparent material, such as glass, in order to avoid balance problems with the vacuum created in box 9 and in outlet 15. If the cut part is small enough with respect to the size of the substrate, the substrate will be properly held against the exterior surface of the bottom wall during the cutting operation, even if the cutting opening is closed by a transparent material.

In a variant, it is also possible to remove the evacuation outlet 15 and evacuate the cut part through box 9.

Box 9 and evacuation outlet 15 (when present) are also useful to evacuate the fumes created by the cutting operation.

When the cutting operation is finished and the cut part has been evacuated, the substrate can be taken away by the chain gripper system 7 for further treatment, i.e. the chain gripper system 7 advances thus taking the cut substrate 1 to a second transfer cylinder 16 and the cut substrate 1 may undergo a further treatment, such as laminating a foil over the window, in a further machine (not shown). An example of such a laminate foil application machine is given in European patent application filed on April 30, 2003 with the title "Machine for applying and cutting strips of laminate", in the name of KBA-GIORI S.A., the content of which is incorporated by reference in the present application. Another example of application of such a strip of laminate foil is disclosed in European patent application N°02405782.0 filed on September 10, 2002 in the name of KBA-GIORI S.A., the content of which is incorporated by reference in the present application.

The application of a strip of foil as known in the art and disclosed hereabove would then allow the use of the technology disclosed in patent application EP 1 291 195 and in EP patent application 02405782.0 filed on September 19, 2002 in the name of KBA-GIORI S.A., both being incorporated by reference in the present application, to apply a recto-verso security and control element to the cut substrate.

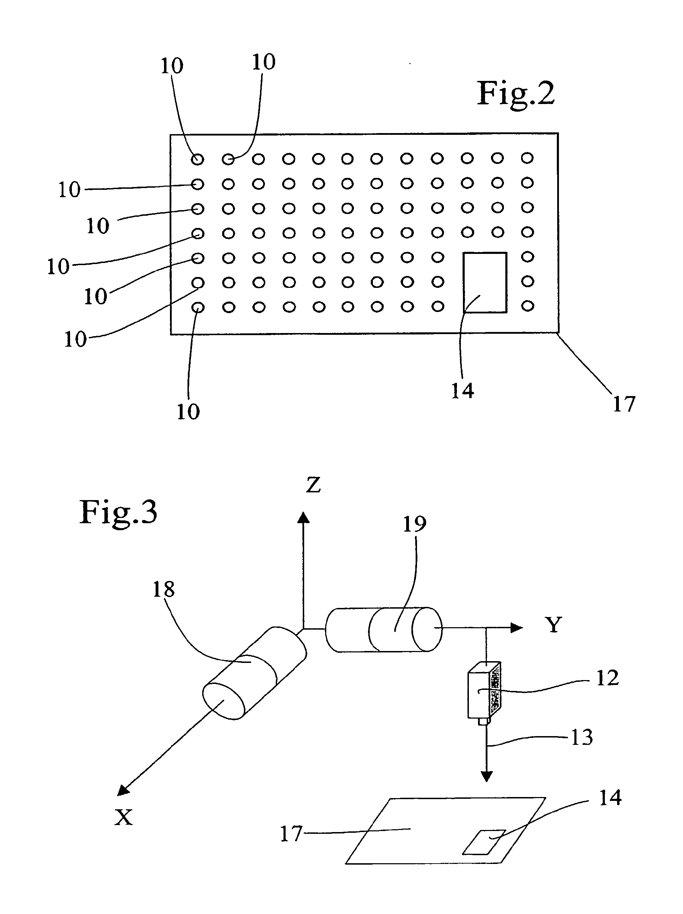

In figure 2, a top view in cross-section of the aspiration box 9 is represented. The bottom wall 17 has, as a non-limiting example, a rectangular shape and comprises several holes 10 for allowing the air under depression in the box 9 to act on the substrate and apply the substrate against the outer surface of the bottom wall 17 during the cutting operation. The bottom wall 9 further comprises the opening 14 through which the cutting is effected by the laser beam 13. The shape of the opening 14 is given by way of an example as rectangular but other shapes are possible (square, round, triangular etc.).

As mentioned above, the opening 14 may be closed by transparent material to avoid vacuum balance problems between the box 9 and the outlet 15.

In figure 3, a first system for moving the laser beam 13 along two cutting directions is shown. In this system, the principle of which is known in the art, the laser itself 12 is displaced, for example by rotation or linearly, along two axis X and Y by appropriate actuators 18, 19 (rotating or linear) to carry out the cutting operation of the substrate 1 by displacing the laser beam 13 through bottom wall 17 and opening 14.

In a variant represented in figure 4, the laser 12 itself is fixed and only the laser beam 13 is guided along the shape to be cut in the substrate through opening 14 of bottom wall 17, for example by a mirror 20 which can rotate around two orthogonal axis with appropriate actuation means 21, 22 for example motors driven actuators, the principle of which is well known in the art.

The embodiments of the invention described in the present specification are given as illustrative examples and must not be interpreted in a limiting manner. Other variants and equivalent solutions are possible within the scope of the appended claims.

## Claims

1. machine for cutting an opening, such as a window in a planar substrate (1), said machine having at least a cutting tool (12, 13), a transfer system (7, 8) holding said substrate (1) and driving said substrate along a determined direction, and an aspiration box (9) to maintain the substrate (1) during the cutting operation, said cutting tool comprising a laser (12) generating a laser beam (13) that can be moved in two perpendicular directions and evacuation means (9, 11; 15) to evacuate a cut part of said substrate (1), **characterized in that** said aspiration box (9) is located on the same side of the substrate as said cutting tool (12, 13) and further comprises a bottom wall (17) with aspiration openings (10) against which said substrate (1) is aspirated and a cutting opening (14) through which said laser beam (13) is directed onto the substrate.

2. Machine according to claim 1, wherein said evacuation means (9, 11) evacuate the cut part by aspiration through said aspiration box (9) .

3. Machine according to claim 1, wherein said evacuation means comprise an evacuation outlet (15) for evacuating the cut part by aspiration which is disposed on the other side of the substrate with respect to the bottom wall (17) against which the substrate (1) is applied during the cutting operation.

4. Machine according to claim 3, wherein said cutting opening (14) is closed by a transparent material, such as glass.

5. Machine according to any of the preceding claims, wherein said transfer system is a chain gripper system (7) comprising a chain on which gripper bars (8) are mounted.

6. Machine according to any of the preceding claims, wherein said laser (12) is displaced linearly or rotationally.

7. Machine according to any of claims 1 to 5, wherein said laser beam (13) is displaced linearly or rotationally.

8. Machine according to any one of the preceding claims, further comprising a laminate application unit for applying a scrip of laminate over the cut opening of the substrate.

9. Process of cutting an opening, such as a window, in a planar substrate (1), said process comprising the following steps:
- holding said substrate (1) with a gripper (8),
- moving said substrate (1) with help of the gripper (8) along a given direction,
- applying said substrate (1) against a surface (17) by using air under depression,
- directing a laser beam (13) onto said substrate (1) through a cutting opening (14) provided in said surface (17) to cut: an opening in said substrate (1),
- evacuating the cut part of said substrate (1) .

10. Process according to claim 9, wherein said cut part is evacuated by aspiration through said aspiration box (9).

11. Process according to claim 9, wherein said cut part is evacuated by aspiration through an evacuation outlet (15) disposed on the other side of the substrate (1) with respect to the surface (17) against which the substrate (1) is applied during the cutting operation.

12. Process according to any of claims 9 to 11, wherein said laser (12) is displaced linearly or rotationally.

13. Process according to any of claims 9 to 11, wherein said laser beam (13) is displaced linearly or rotationally.

14. Process according to claim 13, wherein a mirror (20) displaces said laser beam (13).

15. Process according to any of claim 9 to 14, further comprising the step of applying laminate over the cut opening of the substrate (1).

## Patentansprüche

1. Maschine zum Schneiden einer Öffnung, z.B. eines Fensters, in ein ebenes Substrat. (1), mit wenigstens einem Schneidwerkzeug (12, 13), mit einem Transfersystem (7, 8), welches das erwähnte substrat (1) festhält und längs einer bestimmten Richtung bewegt, und mit einem Saugkasten (9) zum Halten des substrats (1) während daβ Sehneidvorgangs, wobei das erwähnte Schneidwerkzeug einen Laser (12) zum Erzeugen eines Laserstrahl (13), welche;: in zwei zu einander senkrechten Richtungen bewegt werden kann, und Entleerungsmittel (9, 11; 15) zum Entfernen eines ausgeschnittenen Teils daß Substrats (1) aufweist, **dadurch gekennzeichnet, dass** der erwähnte saugkasten (9) auf derselben Seite des Substrats wie das Schneidwerkzeug (12, 13) angeordnet ist und ferner eine Bodenwand (17) mit Saugöffnungen (10), gegen die das Substrat (1) angesaugt wird, sowie eine Schneidöffnung (14) aufweist, durch welche der erwähnte Laserstrahl (13) hindurch auf das substrat gerichtet ist.

2. Maschine nach Anspruch 1, wobei die erwähnten Entleerungsmittel (9, 11) das ausgeschnittene Teil durch den erwähnten Saukasten absaugen.

3. Maschine nach Anspruch 1, wobei die erwähnten Entleerungsmittel einen Entleerungsauslass (15) zum Absaugen des ausgeschnittenen Teils aufweisen, welcher auf der anderen Seite des Substrats in bezug auf die Bodenwand (17), gegen welche das Substrat (1) während des Schneidvorgangs angedrückt wird, angeordnet ist.

4. Maschine nach Anspruch 3, wobei die Schneidöffnung (14) durch ein transparentes Material wie Glas verschlossen ist.

5. Maschine nach einem der vorangehenden Ansprüche, wobei das Transfersystem ein Kattengreifersystem (7) mit einer Kette ist, an der greiferstangen (8) montiert sind.

6. Maschine nach einem der vorangehenden Ansprüche, wobei der erwähnte Laser (12) geradlinig verschiebbar o-dex drehbar angeordnet ist.

7. Maschine nach einem der Ansprüche 1 bis 5, wobei der Laserstrahl (13) linear verschiebbar oder drehbar ist.

8. Maschine nach einem der vorangehenden Ansprüche, welche ferner eine Anordnung zum Anlegen eines Laminatstreifens auf die Schneidöffnung des Substrats aufweist.

9. Verfahren, welches das Schneiden einer Öffnung, z.B. eines Fensters, in ein ebenes Substrat (1) einschliesst, **gekennzeichnet durch** folgende Schritte.
- Festhalten, des Substrats (1) mit einem Greifer (8),
- Bewegen dieses substrats (1) mit Hilfe des Greifers (6), längs einer gegebenen Richtung,
- Anlegen des Substrats (1) gegen eine Oberfläche (17) unter Verwendung von Saugluft,
- Ausrichten eines Laserstrahls (13) auf das Substrat (1) **durch** eine Schneidöffnung (14) hindurch, die in der erwähnten Oberfläche (17) vorgesehen ist, um eine Öffnung in das Substrat (1) zu schneiden,
- Entfernen des ausgeschnittenen Teils des Substrats (1).

10. Verfahren nach Anspruch 9, wobei das ausgeschnittene Teil durch Saugkasten (9) abgesaugt wird.

11. Verfahren nach Anspruch 9, wobei das ausgeschnittene Teil durch einen Entleerungsauslass (15) abgesaugt wird, der auf der anderen Seite des Substrats in bezug auf die Oberfläche (17) vorgesehen ist, gegen die das Substrat (1) während des Schneidvorgangs angedrückt wird.

12. Verfahren nach einem der Ansprüche 9 bis 11 wobei der Laser (12) linear verschoben oder gedreht wird.

13. verfahren nach einem der Ansprüche 9 bis 11, wobei der Laserstrahl (13) linear verschoben oder gedreht wird.

14. Verfahren nach Anspruch 13, wobei ein Spiegel (20) den Laserstrahl (13) bewegt.

15. Verfahren nach einem der Ansprüche 9 bis 14, welches ferner den Schritt aum Anlegen eines Laminats auf die Schneidöffnung des Substrats (1) einschliesst.

## Revendications

1. Machine pour découper une ouverture telle qu'une fenêtre dans un substrat plan (1), ladite machine comprenant au moins un outil de coupe (12, 13), un système de transport (7, 8) retenant ledit substrat (1) et permettant le déplacement du dit substrat le long d'une direction déter-* minée, et un boîtier d'aspiration (9) pour maintenir le substrat (1) en place au cours de l'opération de coupe, ledit outil de coupe comprenant un laser (12) produisant un faisceau laser (13) pouvait se mouvoir dans deux directions perpendiculaires, et de moyens d'évacuation (9, 11; 15) pour retirer une partie coupée dudit substrat (1), **caractérisée en ce que** ledit bottier d'aspiration (9) est situé du même côté du substrat que ledit outil de coupe (12, 13), et que la machine comporte en plus une paroi de fond (17) présentant des ouvertures d'aspiration (10) contre lesquelles ledit substrat (1) est aspiré, et une ouverture de découpe (14) à travers laquelle ledit faisceau laser (13) est dirigé sur le substrat.

2. Machine selon la revendication 1, dans laquelle lesdits moyens d'évacuation (9, 11) enlèvent la partie découpée par aspirations au travers dudit boîtier d'aspiration (9).

3. Machins selon la revendication 1, dans laquelle lesdits moyens d'évacuation comprennent une sortie d'évacuation (15) pour l'évacuation par aspiration de la partie découpée, cette sortie étant disposée de l'autre coté du substrat par rapport à la paroi de fond (17) contre laquelle le substrat (1) est appliqué au cours de l'opération de découpe.

4. Machine selon la revendication 3, dans laquelle la dite ouverture de découpe (14) est fermée par une matière transparente telle que le verre.

5. Machine selon l'une quelconque des revendications précédentes, dans laquelle ledit système de transport est un système de chaîne à pinces (7) comprenant une chaîne aur laquelle sont montées des barres preneuses (8).

6. Machine salon l'une quelconque des revendication précédentes, dans laquelle ledit laser (12) est déplace de façon linéaire ou rotative.

7. Machine selon l'une quelconque des revendications 1 à 5, dans laquelle ledit faisceau laser (13) est déplacé de façon linéaire ou rotative.

8. Machine selon l'une quelconque des revendications précédentes, comprenant en plus une unité d'application d' un laminé pour appliquer une bande d'un laminé sur l'ouverture découpée dans le substrat.

9. Procédé pour découper une ouverture telle qu'une fenêtre dans un substrat plan (1), ledit procédé comprenant lea étapes suivantes :
- retenir ledit substrat (1) au moyen d'un dispositif à pinces (8),
- déplacer ledit substrat (1) à l'aide des pinces (8) le long d'une direction déterminée,
- appliquer ledit substrat (1) contre une surface (17) en utilisant de l'air en dépression,
- diriger un faisceau laser (13) sur ledit substrat (1) à travers une ouverture de découpe (14) pratiquée dans ladite surface (17) afin de découper une ouverture dans ledit substrat (1) ,
- évacuer la partie découpée dans ledit substrat (1)

10. Procédé selon la revendication 9, dans lequel ladite partie découpés est évacuée par aspiration à l'aide du boîtier d'aspiration (9).

11. Procédé selon la revendication 9, dans lequel ladite partie découpée est évacuée par aspiration à travers une sortie d'évacuation (15) disposée à l'autre côté du substrat (1) par rapport à la surface (17) contre laquelle le substrat (1) est appliqué au cours de l'opération de découpe.

12. Procédé selon l'une quelconque des revendications 9 à 11, dans lequel ledit laser (12) est déplacé de façon linéaire ou rotative.

13. Procédé selon l'une quelconque des revendications 9 à 11, dans lequel ledit faisceau laser (13) est déplacé de façon linéaire ou rotative.

14. Procédé selon la revendication 13, dans lequel un miroir (20) déplace ledit faisceau, laser (13).

15. Procédé selon l'une quelconque des revendications 9 à 14, comprenant en plus l'étape d'application d'un laminé sur l'ouverture découpée dans le substrat (1).
